# EUROPÄISCHE PATENTSCHRIFT

(11) **EP 3 463 949 B1**
(45) Veröffentlichungstag und Bekanntmachung des Hinweises auf die Patenterteilung: **05.05.2021**
(21) Anmeldenummer: 17710533.5
(22) Anmeldetag: 13.03.2017
(51) Int. Cl.: B60J 5/04

(54) **AUSSENHAUTMODUL EINER FAHRZEUGTÜR SOWIE FAHRZEUGTÜR MIT EINEM SOLCHEN AUSSENHAUTMODUL**
OUTER SKIN MODULE OF A VEHICLE DOOR AND VEHICLE DOOR HAVING SUCH AN OUTER SKIN MODULE
MODULE DE PEAU EXTÉRIEURE D'UNE PORTE DE VÉHICULE ET PORTE DE VÉHICULE DOTÉE D'UN TEL MODULE DE PEAU EXTÉRIEURE

(30) Priorität: 25.05.2016 DE 102016209148
(43) Veröffentlichungstag der Anmeldung: 10.04.2019
(73) Patentinhaber: Bayerische Motoren Werke Aktiengesellschaft, 80809 München (DE)
(72) Erfinder: SOLDNER, Florian, 83098 Brannenburg (DE); VALLERIUS, Markus, 80335 München (DE)
(86) Internationale Anmeldenummer: PCT/EP2017/055833
(87) Internationale Veröffentlichungsnummer: WO 2017/202516

(56) Entgegenhaltungen:
- EP-A2- 1 688 287
- US-A1- 2009 224 571
- US-A1- 2010 229 470

## Beschreibung

Die Erfindung betrifft eine Fahrzeugtür mit einem Außenhautmodul.

Im Fahrzeugbau sind die Fahrzeugtüren heutzutage komplexe Baueinheiten, welche zahlreiche Einzelteile umfassen. Hauptbestandteile sind normalerweise ein Türrohbau, eine außenseitig am Türrohbau angebrachte Außenverkleidung, eine innenseitig am Türrohbau angebrachte Innenverkleidung sowie zahlreiche zwischen der Außenverkleidung und der Innenverkleidung angeordnete Einbauteile wie etwa ein elektrischer Fensterheber, ein Lautsprecher, ein Seitenaufprallschutz, ein Verriegelungsmechanismus für die Fahrzeugtür oder Ähnliches.

Beispielsweise ist in der US 2009/224571 A1 ein Kollisionsabsorptionssystem beschrieben, das zwischen einer inneren und äußeren Schale einer Fahrzeugtür angeordnet ist, wobei das Kollisionsabsorptionssystem u.a. ein Doppelstützpolster umfasst, das an zwei Aufprallträgern befestigt ist.

Aus dem Stand der Technik ist es ferner bereits bekannt, die Außenverkleidung der Fahrzeugtür als Außenhautmodul mit einer Außenhaut und einem mit der Außenhaut verbundenen Montagerahmen zur Befestigung des Moduls am Türrohbau auszubilden. Die Außenhaut ist zum Beispiel eine Blechschale aus Aluminium und wird randseitig auf den Montagerahmen aufgebördelt. Der randseitig umlaufende Montagerahmen stellt eine exakte und zuverlässige Befestigung der Außenhaut am Türrohbau sicher, da eine direkte Befestigung der dünnen Blechschale aufgrund der geringen Blechdicke von üblicherweise etwa 1,2 mm technisch problematisch ist.

Die EP 1 688 287 A2 offenbart eine Fahrzeugseitentür mit einer Innen- und Außenblechschale und einer Türverstärkung, wobei die Türverstärkung zwischen den Blechschalen angeordnet ist.

In der US 2010/0229470 A1 ist eine Fahrzeugtür beschrieben, die einen Tragrahmen umfasst, an dessen Außenseite ein Außenblech angeklebt und an dessen Innenseite ein Innenblech angeschraubt ist.

Der Montagerahmen ist in der Regel ein Aluminiumblech mit einer Blechdicke von etwa 1,5 mm bis 2,0 mm und kann mit dem Türrohbau verklebt oder verschraubt sein.

Es hat sich allerdings herausgestellt, dass ein solches Außenhautmodul bestehend aus der schalenförmigen Außenhaut sowie dem Montagerahmen aufgrund der großflächigen Außenhaut ein sehr labiles Gebilde ist, wodurch sich Probleme bei der Handhabung ergeben. So erhöht sich zum Beispiel der Aufwand zum Lackieren des Außenhautmoduls, da zusätzliche Stabilisierungsmaßnahmen notwendig sind. Darüber hinaus ist die Fertigung des Montagerahmens recht aufwendig, da der im Inneren des Montagerahmens herauszunehmende Blechabschnitt aufgrund der großen Abmessungen nicht in einem Verfahrensschritt ausgestanzt, sondern nur schrittweise entfernt werden kann.

Im Übrigen gibt es generell Bestrebungen, das Gewicht der Fahrzeugtür zu reduzieren und deren komplexen Aufbau zu vereinfachen.

Aufgabe der Erfindung ist es, ein einfach herzustellendes, stabiles Außenhautmodul sowie eine Fahrzeugtür mit einem solchen Außenhautmodul zu schaffen, welche einen einfachen konstruktiven Aufbau sowie ein möglichst geringes Gewicht aufweist.

Erfindungsgemäß wird diese Aufgabe gelöst durch eine Fahrzeugtür mit einem vorgefertigten Außenhautmodul und einem Türrohbau, der ein faserverstärktes Kunststoffbauteil ist, mit dem das vorgefertigte Außenhautmodul verschraubt ist. Das Außenhautmodul umfasst dabei eine schalenförmige Außenhaut, die aus Blech ist und einen Schalenrand aufweist, und eine einstückige Modulkomponente mit einem randseitig umlaufenden und mit dem Schalenrand der Außenhaut verbundenen Montagerahmen zur Befestigung der Außenhaut am Türrohbau der Fahrzeugtür, einem Seitenaufprallträger zur Versteifung der Fahrzeugtür und wenigstens einer einstückig angeformten Versteifungsstrebe, die sich quer zu einer Längsrichtung des Seitenaufprallträgers vom Seitenaufprallträger zum Montagerahmen erstreckt. Der Montagerahmen, der Seitenaufprallträger und die wenigstens eine Versteifungsstrebe sind zusammen als einstückige, ungeschweißte Einheit in Form eines umgeformten Blechstanzteils ausgeführt, wobei die wenigstens eine Versteifungsstrebe zwischen dem Seitenaufprallträger und dem Montagerahmen zumindest abschnittsweise, vorzugsweise über ihre gesamte Länge mit der Außenhaut verklebt ist.

Der Türrohbau aus Kunststoff weist bei geringem Gewicht eine hohe Festigkeit auf und lässt sich im Spritzgussverfahren mit geringem Aufwand formen und herstellen.

Infolge der integrierten Ausführung des Montagerahmens und des Seitenaufprallträgers als einstückige Modulkomponente wird das Außenhautmodul deutlich stabiler. Zudem muss der üblicherweise sowieso vorgesehene Seitenaufprallträger nicht mehr als zusätzliches Einzelbauteil in einem separaten Verfahrensschritt am Türrohbau befestigt werden. Stattdessen erfolgt die Montage des Seitenaufprallträgers nunmehr zusammen mit der Montage des Außenhautmoduls in einem gemeinsamen Verfahrensschritt.

Die aufgrund des integrierten Seitenaufprallträgers erhöhte Eigensteifigkeit des Außenhautmoduls ermöglicht außerdem einen einfacheren Transport sowie einen geringeren Aufwand beim Lackieren des Außenhautmoduls.

Durch eine oder mehrerer Versteifungsstreben erhöht sich in vorteilhafter Weise die Stabilität des Außenhautmoduls der Fahrzeugtür. Zudem verringern sich die Abmessungen der im Inneren des Montagerahmens auszustanzenden Blechabschnitte, sodass sich die einstückige Modulkomponente einfacher aus einem Blechrohling ausstanzen lässt.

Mit der abschnittsweisen Verbindung der wenigstens einen Versteifungsstrebe wird die Außenhaut von der wenigstens einen Versteifungsstrebe fixiert und somit am Beulen gehindert. Aufgrund dieser zusätzlichen Abstützungen wird die Außenhaut nicht mehr in ihrer Gesamtfläche, sondern nur noch in mehreren kleinen Teilflächen auf Beulen beansprucht, sodass sich in vorteilhafter Weise die Beulsteifigkeit und damit die Dicke der Außenhaut reduzieren lässt.

Infolge der Ausführung des Montagerahmens als Modulkomponente mit einstückig integrierten Einbauteilen werden durch die Verschraubung gleichzeitig mit der schalenförmigen Außenhaut auch der Seitenaufprallträger und die optionale Brüstungsverstärkung am Türrohbau befestigt, sodass sich der Zusammenbau der Fahrzeugtür in vorteilhafter Weise vereinfacht. Der Zusammenbau kann durch werkzeugfallende oder anlagenbedingte Absteckung weiter vereinfacht werden. Bei der werkzeugfallenden Referenzierung ist auch ein Abnehmen und wiederholgenaues Aufsetzen im Servicefall möglich und erlaubt somit ein Schließen der Wartungsöffnungen im Türinnenteil.

In einer Ausführungsform des Außenhautmoduls weist der Montagerahmen der Modulkomponente einen Rahmenabschnitt auf, der an eine Fensteröffnung der Fahrzeugtür angrenzt, wobei die Modulkomponente entlang dieses Rahmenabschnitts eine einstückig angeformte Brüstungsverstärkung zur Stabilisierung des Außenhautmoduls aufweist. Diese Brüstungsverstärkung führt in vorteilhafter Weise zu einer weiteren Stabilisierung des Außenhautmoduls, sodass sich zum Beispiel dessen Handhabung beim Transportieren oder Lackieren weiter verbessert. Ferner ist üblicherweise auch bei herkömmlichen Fahrzeugtüren eine Brüstungsverstärkung zur Stabilisierung des Außenhautmoduls vorgesehen, wobei diese Brüstungsverstärkung jedoch als separates Bauteil ausgeführt ist. Aufgrund der in die einstückige Modulkomponente integrierten Brüstungsverstärkung sinkt folglich die Anzahl der Einzelbauteile und damit der Montageaufwand für die Fahrzeugtür.

Die einstückige Modulkomponente ist vorzugsweise ein umgeformtes Blechstanzteil, insbesondere aus einem Aluminiumblech mit einer Blechdicke von etwa 1,5 mm bis 2,0 mm. Ausgehend von einem herkömmlichen Montagerahmen verringern sich aufgrund des Seitenaufprallträgers sowie der optional vorgesehenen Brüstungsverstärkung die Abmessungen der im Inneren des Montagerahmens auszustanzenden Blechabschnitte, sodass der Fertigungsaufwand für die einstückige Modulkomponente gegenüber einem herkömmlichen Montagerahmen reduziert ist.

Vorzugsweise ist der Seitenaufprallträger im Inneren des Montagerahmens angeordnet und erstreckt sich nahezu linear zwischen zwei im Wesentlichen gegenüberliegenden Punkten des Montagerahmens. Insbesondere erstreckt sich der Seitenaufprallträger in einer Längsrichtung der Fahrzeugtür, wobei die Längsrichtung der Fahrzeugtür in deren eingebautem Zustand einer Fahrzeuglängsrichtung entspricht. Als zusätzliche Skalierungsmaßnahme kann mittels eines aufgesetzten Deckbleches die Steifigkeit des Seitenaufprallträgers kostengünstig modifiziert werden. Auf diese Weise ist ein besonders effizienter Insassenschutz durch den Seitenaufprallträger gewährleistet.

Insbesondere unterteilt die wenigstens eine Versteifungsstrebe eine vom Seitenaufprallträger und dem Montagerahmen eingeschlossene Fläche in etwa gleich große Teilflächen. Diese Teilflächen bestimmen die Größe der beim Ausstanzen der Modulkomponente als Abfall anfallenden Blechabschnitte. Je kleiner diese Blechabschnitte sind, desto eher kann die Modulkomponente in nur einem einzigen Verfahrensschritt ausgestanzt werden.

Erfindungsgemäß ist die schalenförmige Außenhaut ein Blech, insbesondere ein Aluminiumblech, wobei die Blechdicke besonders bevorzugt weniger als 1 mm beträgt. Die gegenüber einer herkömmlichen Außenhaut verringerte Blechdicke ist insbesondere aufgrund der zusätzlichen Fixierung der Außenhaut auf dem Seitenaufprallträger, der wenigstens einen optionalen Versteifungsstrebe und/ oder der optionalen Brüstungsverstärkung möglich.

Um die Steifigkeit und Festigkeit des Außenhautmoduls weiter zu erhöhen, kann die schalenförmige Außenhaut an ihrem Schalenrand umlaufend mit dem Montagerahmen verschweißt, insbesondere laserverschweißt sein. Alternativ ist jedoch auch denkbar, dass der Schalenrand und der Montagerahmen umlaufend durch Bördeln und Verkleben miteinander verbunden sind.

Gemäß einer Ausführungsform der Fahrzeugtür ist der Montagerahmen umlaufend mit dem Türrohbau verklebt. Während die Verschraubung zwischen dem Außenhautmodul und dem Türrohbau eine feste und zuverlässige Verbindung gewährleistet, dient die Verklebung hauptsächlich der Abdichtung und Schalldämmung.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine Außenansicht sowie einen Längsschnitt und einen Querschnitt eines Außenhautmoduls einer erfindungsgemäßen Fahrzeugtür;
- Figur 2 eine Innenansicht des Außenhautmoduls gemäß Figur 1; und
- Figur 3 eine Außenansicht einer erfindungsgemäßen Fahrzeugtür mit dem Außenhautmodul gemäß Figur 1 und 2 bei abgenommener Außenhaut.

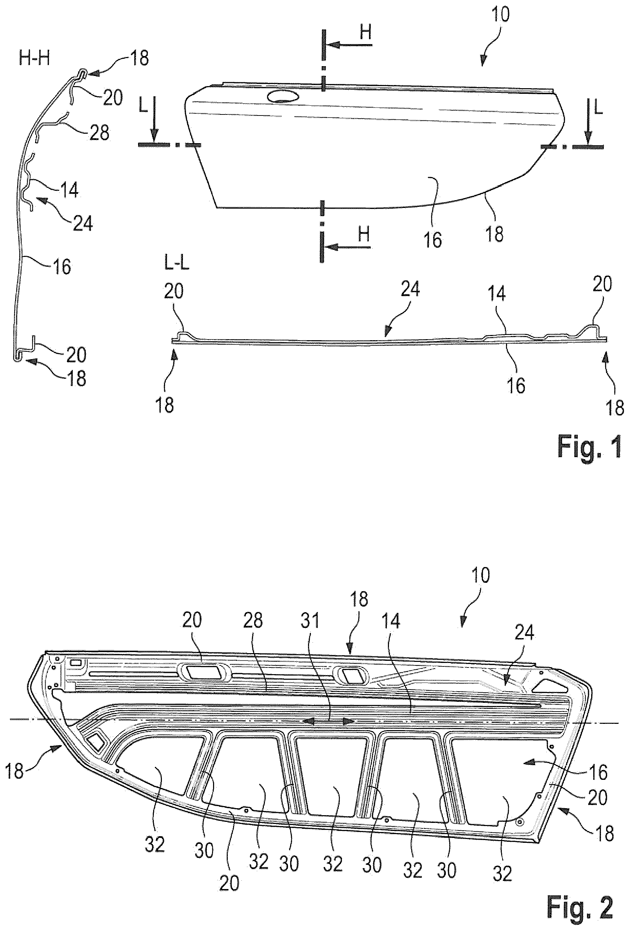

In den Figuren 1 und 2 ist ein Außenhautmodul 10 einer Fahrzeugtür 12 dargestellt, wobei die Figur 1 eine Außenansicht, einen Längsschnitt L - L sowie ein Querschnitt H - H und die Figur 2 eine Innenansicht des Außenhautmoduls 10 zeigen.

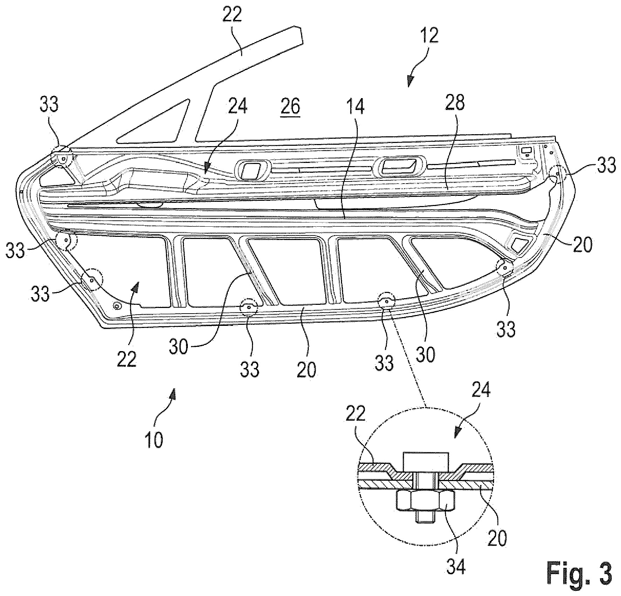

Das Außenhautmodul 10 umfasst gemäß Figur 2 einen Seitenaufprallträger 14 zur Versteifung der Fahrzeugtür 12, eine schalenförmige Außenhaut 16, die einen Schalenrand 18 aufweist, und einen randseitig umlaufenden und mit dem Schalenrand 18 der Außenhaut 16 verbundenen Montagerahmen 20 zur Befestigung der Außenhaut 16 an einem Türrohbau 22 (siehe Figur 3) der Fahrzeugtür 12.

Da die in Figur 1 dargestellte, üblicherweise lackierte Außenseite der Außenhaut 16 im montierten Zustand des Außenhautmoduls 10 eine von außerhalb des Fahrzeugs sichtbare Fahrzeugoberfläche bildet, werden an die Außenhaut 16 hohe Anforderungen in Bezug auf die Oberflächengüte gestellt. Um diese Anforderungen zu erfüllen, ist die schalenförmige Außenhaut 16 im dargestellten Ausführungsbeispiel ein Blech, insbesondere ein Aluminiumblech.

Anhand der Figur 2 wird deutlich, dass der randseitig umlaufende Montagerahmen 20 und der Seitenaufprallträger 14 als einstückige, ungeschweißte Modulkomponente 24 ausgeführt sind. Diese Modulkomponente 24 ist dabei ein umgeformtes Blechstanzteil, wobei aus Gewichtsgründen bevorzugt ein Aluminiumblech mit einer Blechdicke in der Größenordnung von etwa 1,5 mm bis 2,0 mm verwendet wird. Alternativ ist jedoch auch die Verwendung eines Stahlblechs denkbar.

Der Seitenaufprallträger 14 ist gemäß Figur 2 im Inneren des Montagerahmens 20 angeordnet und erstreckt sich nahezu linear zwischen zwei im Wesentlichen gegenüberliegenden Punkten des Montagerahmens 20.

Der mit Bezug auf den Schalenrand 18 der Außenhaut 16 randseitig umlaufende Montagerahmen 20 liegt gemäß Figur 2 auf der Außenhaut 16 auf und ist an seinem Außenrand mit dem Schalenrand 18 verbunden. Konkret sind der Schalenrand 18 und der Montagerahmen 20 im vorliegenden Fall umlaufend durch Bördeln und Verkleben aneinander befestigt.

Alternativ ist jedoch auch denkbar, dass die schalenförmige Außenhaut 16 an ihrem Schalenrand 18 umlaufend mit dem Montagerahmen 20 verschweißt, insbesondere laserverschweißt ist, um die Festigkeit und Steifigkeit des Außenhautmoduls 10 zu erhöhen.

Der Montagerahmen 20 der Modulkomponente 24 weist einen Rahmenabschnitt auf, der an eine in Figur 3 angedeutete Fensteröffnung 26 der Fahrzeugtür 12 angrenzt, wobei die Modulkomponente 24 entlang dieses Rahmenabschnitts eine einstückig angeformte Brüstungsverstärkung 28 zur Stabilisierung des Außenhautmoduls 10 aufweist.

Die Brüstungsverstärkung 28 ist dabei genau wie der Seitenaufprallträger 14 ein im Wesentlichen linearer Verstärkungsabschnitt der Modulkomponente 24.

Im Schnitt H - H der Figur 1 wird deutlich, dass der Seitenaufprallträger 14 und die Brüstungsverstärkung 28 so profiliert sind, dass sie im Querschnitt nicht vollflächig, sondern nur abschnittsweise an der schalenförmigen Außenhaut 16 anliegen. Die Stabilisierung des Außenhautmoduls 10 ist dabei hauptsächlich auf die im Querschnitt schräg oder quer zur Schalenfläche der Außenhaut 16 verlaufenden Profilbereiche zurückzuführen.

Der lineare Seitenaufprallträger 14 erstreckt sich in einer Längsrichtung 31 zwischen zwei im Wesentlichen gegenüberliegenden Punkten des Montagerahmens 20, wobei im Schnitt L - L der Figur 1 deutlich wird, dass der Seitenaufprallträger 14 über den größten Teil seiner Längserstreckung, insbesondere über nahezu seine gesamte Länge direkt an der Außenhaut 16 anliegt. Dies gilt analog auch für die Brüstungsverstärkung 28.

Gemäß Figur 2 weist die Modulkomponente 24 vier einstückig angeformte Versteifungsstreben 30 auf, die sich quer zur Längsrichtung 31 des Seitenaufprallträgers 14 vom Seitenaufprallträger 14 zum Montagerahmen 20 erstrecken. Dabei unterteilen die vier Versteifungsstreben 30 eine vom Seitenaufprallträger 14 und dem Montagerahmen 20 eingeschlossene Fläche in fünf etwa gleich große Teilflächen 32. Bei der Herstellung der einstückigen Modulkomponente 24 bestimmen diese Teilflächen 32 die Größe der Blechabschnitte, welche beim Ausstanzen der Modulkomponente 24 als Abfallstücke anfallen. Mit abnehmender Größe der Abfallstücke verringert sich dabei der Fertigungsaufwand für die Modulkomponente 24, da die Blechabschnitte unterhalb einer vorbestimmten Grenzgröße in einem einzigen Stanzschritt entfernt werden können. Bei einer geometrisch vorteilhaften Gestaltung lässt sich folglich die gesamte einstückige Modulkomponente 24 in nur einem Verfahrensschritt aus einem Blechrohling ausstanzen.

Um eine Beulbeanspruchung der schalenförmigen Außenhaut 16 zu reduzieren, sind die Versteifungsstreben 30 zwischen dem Seitenaufprallträger 14 und dem Montagerahmen 20 zumindest abschnittsweise, vorzugsweise jedoch über ihre gesamte Länge mit der Außenhaut 16 verbunden, insbesondere verklebt. Als Kleber wird beispielsweise ein Blähschaum verwendet, der unter erhöhten Temperaturen, wie sie beispielsweise beim Einbrennen des Lacks in der Lackieranlage des Außenhautmoduls 10 auftreten, expandiert. Der Blähschaum verhindert dann zuverlässig, dass bei geringen Relativbewegungen zwischen der Außenhaut 16 und der Modulkomponente 24 unerwünschte Kratz- oder Klappergeräusche auftreten.

Ferner fixiert der Kleber die Außenhaut 16 an den Versteifungsstreben 30, sodass die Außenhaut 16 innerhalb des randseitig umlaufenden Montagerahmens 20 zusätzlich abgestützt wird, insbesondere quer zur Schalenfläche. Dadurch muss die Außenhaut 16 nur noch kleinere Teilflächen 32 frei überspannen, sodass die Anforderungen an die Beulfestigkeit der Außenhaut 16 zurückgehen. Folglich kann eine Blechdicke der schalenförmigen Außenhaut 16 auf weniger als 1 mm reduziert werden, wodurch sich in vorteilhafter Weise Material einsparen und damit auch das Gewicht der Fahrzeugtür 12 reduzieren lässt.

Aus denselben Gründen wie die Versteifungsstreben 30 können alternativ oder zusätzlich auch der Seitenaufprallträger 14 und/oder die Brüstungsverstärkung 28 zumindest abschnittsweise, vorzugsweise jedoch über ihre gesamte Länge mit der Außenhaut 16 verbunden, insbesondere mit Blähschaum verklebt sein.

Auf diese Weise entsteht ein vorgefertigtes Außenhautmodul 10, das sich mit geringem Aufwand herstellen lässt und aufgrund des integrierten Seitenaufprallträgers 14 sowie der integrierten Brüstungsverstärkung 28 eine hohe Eigensteifigkeit aufweist, was wiederum zu Vorteilen bei der Handhabung des Außenhautmoduls 10 führt.

Die zusätzlich in die Modulkomponente 24 integrierten und mit der Außenhaut 16 verbundenen Versteifungsstreben 30 sorgen für eine geringere Beulbeanspruchung der Außenhaut 16 und erlauben damit eine Reduktion der Blechdicke der Außenhaut 16 auf weniger als 1 mm. Die reduzierte Blechdicke kompensiert dabei problemlos das durch die Versteifungsstreben 30 anfallende Mehrgewicht und kann insgesamt sogar zu einem geringeren Gesamtgewicht der Fahrzeugtür 12 führen.

Die Figur 3 zeigt die Fahrzeugtür 12 mit dem vorgefertigten Außenhautmodul gemäß den Figuren 1 und 2 sowie einen Türrohbau 22, an dem das vorgefertigte Außenhautmodul befestigt ist. Die Außenhaut 16 des Außenhautmoduls 10 ist in Figur 3 nicht dargestellt, um die Verbindung zwischen dem Außenhautmodul 10 und dem Türrohbau 22 erkennen zu können.

Das Außenhautmodul 10, insbesondere der Montagerahmen 20 des Außenhautmoduls 10, ist im vorliegenden Ausführungsbeispiel mit dem Türrohbau 22 an mehreren in Figur 3 hervorgehobenen Stellen 33 verschraubt.

Die Verschraubung ist in einem Detailausschnitt der Figur 3 schematisch dargestellt, wobei eine Mutter 34 der Schraubverbindung insbesondere als Stanzmutter ausgeführt und am Montagerahmen 20 vormontiert ist.

Zusätzlich zur Verschraubung ist der Montagerahmen 20 im dargestellten Ausführungsbeispiel umlaufend mit dem Türrohbau 22 verklebt. Die Verklebung hat dabei einen schalldämmenden sowie abdichtenden Effekt und verhindert, dass Feuchte oder Schmutz ins Innere der Fahrzeugtür 12 eindringen können.

Der Türrohbau 22 ist gemäß Figur 3 ein Kunststoffbauteil, konkret ein karbonfaserverstärktes Kunststoffbauteil, welches bei geringem Gewicht eine hohe Festigkeit aufweist und sich darüber hinaus im Spritzgussverfahren einfach herstellen lässt.

Alternativ kann der Türrohbau 22 jedoch auch aus Metall, insbesondere aus Aluminium oder Stahl hergestellt sein.

## Patentansprüche

1. Fahrzeugtür mit einem vorgefertigten Außenhautmodul (10) und einem Türrohbau (22), der ein faserverstärktes Kunststoffbauteil ist, mit dem das vorgefertigte Außenhautmodul (10) verschraubt ist, wobei das Außenhautmodul (10) Folgendes umfasst:
eine schalenförmige Außenhaut (16), die ein Blech ist und einen Schalenrand (18) aufweist, und
eine einstückige Modulkomponente (24) mit
a) einem randseitig umlaufenden und mit dem Schalenrand (18) der Außenhaut (16) verbundenen Montagerahmen (20) zur Befestigung der Außenhaut (16) am Türrohbau (22) der Fahrzeugtür (12),
b) einem Seitenaufprallträger (14) zur Versteifung der Fahrzeugtür (12), und
c) wenigstens einer einstückig angeformten Versteifungsstrebe (30), die sich quer zu einer Längsrichtung (31) des Seitenaufprallträgers (14) vom Seitenaufprallträger (14) zum Montagerahmen (20) erstreckt,
wobei der Montagerahmen (20), der Seitenaufprallträger (14) und die wenigstens eine Versteifungsstrebe (30) zusammen als einstückige, ungeschweißte Einheit in Form eines umgeformten Blechstanzteils ausgeführt sind, und
wobei die wenigstens eine Versteifungsstrebe (30) zwischen dem Seitenaufprallträger (14) und dem Montagerahmen (20) zumindest abschnittsweise, vorzugsweise über ihre gesamte Länge mit der Außenhaut (16) verklebt ist.

2. Fahrzeugtür nach Anspruch 1, **dadurch gekennzeichnet, dass** der Montagerahmen (20) der Modulkomponente (24) einen Rahmenabschnitt aufweist, der an eine Fensteröffnung (26) der Fahrzeugtür (12) angrenzt, wobei die Modulkomponente (24) entlang dieses Rahmenabschnitts eine einstückig angeformte Brüstungsverstärkung (28) zur Stabilisierung des Außenhautmoduls (10) aufweist.

3. Fahrzeugtür nach Anspruch 1 oder 2, **dadurch gekennzeichnet, dass** die einstückige Modulkomponente (24) ein umgeformtes Blechstanzteil ist.

4. Fahrzeugtür nach einem der vorhergehenden Ansprüche, **dadurch gekennzeichnet, dass** der Seitenaufprallträger (14) im Inneren des Montagerahmens (20) angeordnet ist und sich im Wesentlichen linear zwischen zwei im Wesentlichen gegenüberliegenden Punkten des Montagerahmens (20) erstreckt.

5. Fahrzeugtür nach einem der vorhergehenden Ansprüche, **dadurch gekennzeichnet, dass** die wenigstens eine Versteifungsstrebe (30) eine vom Seitenaufprallträger (14) und dem Montagerahmen (20) eingeschlossene Fläche in im Wesentlichen gleich große Teilflächen (32) unterteilt.

6. Fahrzeugtür nach einem der vorhergehenden Ansprüche, **dadurch gekennzeichnet, dass** die schalenförmige Außenhaut (16) eine Blechdicke von weniger als 1 mm aufweist.

7. Fahrzeugtür nach einem der vorhergehenden Ansprüche, **dadurch gekennzeichnet, dass** die schalenförmige Außenhaut (16) an ihrem Schalenrand (18) umlaufend mit dem Montagerahmen (20) verschweißt ist.

8. Fahrzeugtür nach einem der vorhergehenden Ansprüche, **dadurch gekennzeichnet, dass** der Montagerahmen (20) umlaufend mit dem Türrohbau (22) verklebt ist.

## Claims

1. Vehicle door having a prefabricated outer skin module (10) and a door bodyshell (22), which is a fibre-reinforced plastic component to which the prefabricated outer skin module (10) is bolted, wherein the outer skin module (10) comprises the following:
a shell-shaped outer skin (16), which has a panel and a shell edge (18), and
a one-piece module component (24) having
a) a peripherally encircling mounting frame (20) connected to the shell edge (18) of the outer skin (16) and intended for fastening the outer skin (16) to the door bodyshell (22) of the vehicle door (12),
b) a side impact beam (14) for stiffening the vehicle door (12), and
c) at least one integrally formed stiffening strut (30), which extends transversely with respect to a longitudinal direction (31) of the side impact beam (14) from the side impact beam (14) to the mounting frame (20),
wherein the mounting frame (20), the side impact beam (14) and the at least one stiffening strut (30) are together configured as a one-piece, unwelded unit in the form of a formed sheet-metal stamped part, and
wherein the at least one stiffening strut (30) is adhesively bonded, at least in certain portions, preferably over its entire length, to the outer skin (16) between the side impact beam (14) and the mounting frame (20).

2. Vehicle door according to Claim 1, **characterized in that** the mounting frame (20) of the module component (24) has a frame portion which adjoins a window opening (26) of the vehicle door (12), wherein the module component (24) has, along this frame portion, an integrally formed outline reinforcement (28) for stabilizing the outer skin module (10).

3. Vehicle door according to Claim 1 or 2, **characterized in that** the one-piece module component (24) is a formed sheet-metal stamped part.

4. Vehicle door according to one of the preceding claims, **characterized in that** the side impact beam (14) is arranged inside the mounting frame (20) and extends substantially linearly between two substantially opposite points of the mounting frame (20) .

5. Vehicle door according to one of the preceding claims, **characterized in that** the at least one stiffening strut (30) subdivides an area enclosed by the side impact beam (14) and the mounting frame (20) into substantially equal-sized subareas (32).

6. Vehicle door according to one of the preceding claims, **characterized in that** the shell-shaped outer skin (16) has a sheet-metal thickness of less than 1 mm.

7. Vehicle door according to one of the preceding claims, **characterized in that** the shell-shaped outer skin (16) is welded all around at its shell edge (18) to the mounting frame (20).

8. Vehicle door according to one of the preceding claims, **characterized in that** the mounting frame (20) is adhesively bonded all around to the door body shell (22).

## Revendications

1. Porte de véhicule, comprenant un module de peau extérieure préfabriqué (10) et une pièce brute de porte (22) qui est un composant en plastique renforcé par des fibres auquel est vissé le module de peau extérieure préfabriqué (10), le module de peau extérieure (10) comprenant :
une peau extérieure en forme de coque (16) qui est une tôle et qui présente un bord de coque (18), et un composant modulaire d'une seule pièce (24) comprenant
a) un cadre de montage (20) s'étendant tout autour du bord et connecté au bord de coque (18) de la peau extérieure (16), pour la fixation de la peau extérieure (16) à la pièce brute de porte (22) de la porte de véhicule (12),
b) une poutre de choc latéral (14) pour le renforcement de la porte de véhicule (12), et
c) au moins une entretoise de renfort (30) formée d'une seule pièce, qui s'étend transversalement à une direction longitudinale (31) de la poutre de choc latéral (14) depuis la poutre de choc latéral (14) jusqu'au cadre de montage (20),
le cadre de montage (20), la poutre de choc latéral (14) et l'au moins une entretoise de renfort (30) étant réalisés ensemble sous forme d'unité d'une seule pièce non soudée sous la forme d'une pièce en tôle estampée façonnée, et
l'au moins une entretoise de renfort (30) étant collée à la peau extérieure (16) entre la poutre de choc latéral (14) et le cadre de montage (20) au moins en partie, de préférence sur toute sa longueur.

2. Porte de véhicule selon la revendication 1, **caractérisée en ce que** le cadre de montage (20) du composant modulaire (24) présente une portion de cadre qui est adjacente à une ouverture de fenêtre (26) de la porte de véhicule (12), le composant modulaire (24) présentant le long de cette portion de cadre, un renforcement d'appui de porte façonné d'une seule pièce (28) pour stabiliser le module de peau extérieure (10).

3. Porte de véhicule selon la revendication 1 ou 2, **caractérisée en ce que** le composant modulaire d'une seule pièce (24) est une pièce estampée en tôle façonnée.

4. Porte de véhicule selon l'une quelconque des revendications précédentes, **caractérisée en ce que** la poutre de choc latéral (14) est disposée à l'intérieur du cadre de montage (20) et s'étend essentiellement linéairement entre deux points essentiellement opposés du cadre de montage (20).

5. Porte de véhicule selon l'une quelconque des revendications précédentes, **caractérisée en ce que** l'au moins une entretoise de renfort (30) divise une surface délimitée par la poutre de choc latéral (14) et le cadre de montage (20) en surfaces partielles (32) de dimensions sensiblement identiques.

6. Porte de véhicule selon l'une quelconque des revendications précédentes, **caractérisée en ce que** la peau extérieure en forme de coque (16) présente une épaisseur de tôle inférieure à 1 mm.

7. Porte de véhicule selon l'une quelconque des revendications précédentes, **caractérisée en ce que** la peau extérieure en forme de coque (16) est soudée au niveau de son bord de coque (18) sur la périphérie au cadre de montage (20).

8. Porte de véhicule selon l'une quelconque des revendications précédentes, **caractérisée en ce que** le cadre de montage (20) est collé sur la périphérie à la pièce brute de porte (22).
